# FASCICULE DE BREVET EUROPEEN

(11) **EP 2 564 031 B1**
(45) Date de publication et mention de la délivrance du brevet: **07.06.2017**
(21) Numéro de dépôt: 11826201.3
(22) Date de dépôt: 28.04.2011
(51) Int. Cl.: F01D 5/30

(54) **PIÈCE ANTI-USURE POUR ÉCHASSE D'AUBE DE SOUFFLANTE DE TURBORÉACTEUR**
VERSCHLEISSFESTES TEIL ZUM STÜTZEN EINER SCHAUFEL EINES TURBODÜSEN-MOTORLÜFTERS
WEAR-RESISTANT PART FOR THE SUPPORT OF A BLADE OF A TURBOJET ENGINE FAN

(30) Priorité: 28.04.2010 FR 1053270
(43) Date de publication de la demande: 06.03.2013
(73) Titulaire: Snecma, 75015 Paris (FR)
(72) Inventeur: DELAPIERRE, Michaël, F-75012 Paris (FR); REGHEZZA, Patrick, Jean-Louis, F-77000 Vaux Le Penil (FR)
(74) Mandataire: Ilgart, Jean-Christophe
(86) Numéro de dépôt international: PCT/FR2011/050969
(87) Numéro de publication internationale: WO 2012/072903

(56) Documents cités:
- EP-A1- 1 306 523
- EP-A1- 1 764 480
- EP-A1- 1 995 467
- EP-A1- 2 042 689
- EP-A2- 1 355 045
- EP-A2- 1 873 401
- DE-A1-102004 006 706
- GB-A- 836 030
- US-A1- 2002 044 870

## Description

### DOMAINE TECHNIQUE

La présente invention se rapporte au domaine des soufflantes de turboréacteur pour aéronef, et plus particulièrement à celui des échasses des aubes équipant ces soufflantes.

### ÉTAT DE LA TECHNIQUE ANTÉRIEURE

Habituellement, une soufflante de turboréacteur d'aéronef comporte une pluralité d'aubes de soufflante montées sur un disque de soufflante. Le disque définit à sa périphérie une pluralité d'alvéoles espacées tangentiellement les unes des autres, et logeant chacune le pied d'une aube. Chaque aube intègre également une pale aérodynamique, ainsi qu'une échasse interposée entre cette pale et le pied d'aube, a titre d'exemple comme divulgué dans EP1873401. L'échasse présente une épaisseur réduite par rapport à celle du pied, afin de traverser l'ouverture supérieure définie par l'alvéole correspondante, et permettre ainsi la liaison mécanique entre la pale agencée en dehors de l'alvéole, et le pied retenu dans celle-ci. L'échasse comporte une portion arrière se situant à proximité d'une extrémité arrière du disque, cette portion arrière de l'échasse incluant une première surface située du côté de l'intrados de la pale et une seconde surface située du côté de l'extrados de cette pale.

Ces deux surfaces opposées se retrouvent chacune en regard d'une bride de fixation intégrée au disque de soufflante, et faisant saillie radialement vers l'extérieur. De manière connue, ces brides de fixation sont prévues entre les alvéoles, à l'extrémité arrière du disque, et servent à la fixation du tambour sur le disque.

Cette conception, bien que très classique et largement répandue sur les turboréacteurs d'aéronef, présente néanmoins un inconvénient non négligeable, résidant dans l'usure prématurée des première et seconde surfaces arrière de l'échasse. Des investigations ont permis de démontrer que cette usure résultait du frottement entre ces surfaces et leur bride de fixation en regard, essentiellement durant les phases d'autorotation de la soufflante, également dénommées phases de « windmilling ».

Durant ces phases d'autorotation, l'aube a en effet tendance à osciller selon un axe passant par le pied d'aube et parallèle l'axe longitudinal de la soufflante, entre deux positions extrêmes fixées par les deux brides de fixation servant de butées tangentielles pour l'échasse de l'aube. Le jeu initialement prévu entre cette échasse et les deux brides de fixation agencées de part et d'autre de celle-ci est donc consommé, et le frottement qui en découle génère une usure prématurée sur chacune des première et seconde surfaces arrière de l'échasse.

Cette usure se matérialise par la création de deux empreintes sur les surfaces arrière de l'échasse, ces empreintes se creusant progressivement au cours du cycle de vie de l'aube.

Ces empreintes ont tout d'abord pour conséquence néfaste d'affaiblir la résistance mécanique globale de l'échasse.

A cet inconvénient s'ajoute celui de l'augmentation du jeu entre les surfaces usées de l'échasse et leur bride de fixation en regard. L'oscillation de l'aube rencontrée durant les phases d'autorotation voit alors son amplitude augmenter, ce qui accélère l'effet d'usure. De plus, en cas de perte d'une aube adjacente à une aube donnée, les efforts importants résultant du choc et subis par ladite aube donnée ont tendance à faire pivoter celle-ci selon une amplitude plus élevée avant qu'elle ne soit stoppée par la bride de fixation servant de butée tangentielle, ce qui accentue des risques de rupture et de perte de cette même aube donnée.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une soufflante de turboréacteur d'aéronef selon la revendication 1

La pièce anti-usure mise en oeuvre dans l'invention protège donc les deux surfaces arrière de l'échasse de l'aube, et empêche ainsi la formation d'empreintes d'usure sur celles-ci. La résistance mécanique de l'échasse, et plus généralement la résistance mécanique globale de l'aube s'en trouve renforcée.

De plus, l'absence d'empreintes d'usure sur les deux surfaces arrière de l'échasse permet de limiter l'amplitude d'oscillation de l'aube durant les phases d'autorotation de la soufflante, et permet également de limiter l'amplitude de pivotement d'une aube donnée qui serait impactée par une aube adjacente rompue.

Ces amplitudes, définies par les brides de fixation formant butées tangentielles pour l'échasse de l'aube, sont d'ailleurs réduites par l'épaisseur des voiles de protection, qui viennent effectivement se loger entre les surfaces arrière de l'échasse et leur bride de fixation associée. Avec ces amplitudes d'oscillation réduites, c'est l'usure de l'aube et de l'ensemble de ses éléments environnants qui est avantageusement réduite.

La pièce anti-usure peut avantageusement être appliquée sur des aubes de soufflante neuves, en sortie de production, ou bien sur des aubes ayant déjà servi en fonctionnement, en tant que solution de maintenance. Dans ce dernier cas, un avantage notable de l'invention réside de la possibilité de monter la pièce anti-usure sur une aube sans avoir à démonter l'ensemble du turboréacteur, cette opération pouvant en effet être effectuée « sous l'aile » de l'aéronef.

Bien entendu, en cas d'usure de la pièce, celle-ci peut être changée facilement. L'aube peut alors continuer à être utilisée en l'état, ce qui augmente sa durée de vie.

En outre, vu le positionnement particulier de la pièce anti-usure dans la soufflante, ses risques de pertes sont extrêmement faibles, même en cas de rupture de celle-ci.

Par ailleurs, il est indiqué qu'une telle pièce anti-usure équipe préférentiellement toutes les aubes de la soufflante, ce qui ne provoque aucun balourd qui serait susceptible de nécessiter un rééquilibrage de la soufflante.

Selon l'invention De préférence, ladite pièce anti-usure est montée sur l'aube par clipsage. L'opération s'avère par conséquent simple et rapide à réaliser. Dans ce cas de figure, ladite pièce anti-usure est préférentiellement montée sur l'aube par clipsage sur une plateforme de l'aube.

De préférence, chaque voile de protection présente une épaisseur comprise entre 0,2 et 0,5 mm.

De préférence, ladite pièce anti-usure est réalisée dans un alliage renfermant 80 % de nickel, 14 % de chrome et 6 % de fer, tel qu'un alliage Inconel, de préférence l'alliage Inconel 718. Ce matériau peut être identique ou similaire à celui utilisé pour la réalisation de l'échasse de l'aube.

Alternativement, il pourrait s'agir d'un matériau composite à haute résistance mécanique.

De préférence, ladite pièce anti-usure est réalisée par découpe et pliage d'un tôle. Alternativement, elle pourrait être réalisée par usinage, ou bien encore par métallurgie des poudres.

Comme évoqué précédemment, chacune des aubes de la soufflante est de préférence équipée d'une pièce anti-usure.

L'invention a également pour objet un turboréacteur d'aéronef comprenant une soufflante telle que décrite ci-dessus.

Enfin, l'invention a également pour objet une pièce anti-usure destinée à être montée sur une aube d'une soufflante de turboréacteur d'aéronef telle que décrite ci-dessus, de manière à former un voile de protection sur chacune des première et seconde surfaces de l'échasse de l'aube.

D'autres avantages et caractéristiques de l'invention apparaîtront dans la description détaillée non limitative ci-dessous.

### BRÈVE DESCRIPTION DES DESSINS

Cette description sera faite au regard des dessins annexés, parmi lesquels ;
- la figure 1 représente une vue éclatée en perspective d'une partie d'une soufflante de turboréacteur pour aéronef, selon un mode de réalisation préféré de la présente invention ;
- la figure 2 représente une vue partielle en coupe transversale de la soufflante montrée sur la figure 1, passant par les brides de fixation du disque de soufflante ;
- la figure 3 représente une vue similaire à celle de la figure 2, avec l'aube montrée dans une position pivotée rencontrée durant une phase d'autorotation de la soufflante ;
- la figure 4 représente une vue en perspective de la pièce anti-usure équipant les aubes de soufflante ;
- les figures 5a à 5d représentent des vues en perspective d'une partie arrière inférieure de l'une des aubes équipée de sa pièce anti-usure, selon différents angles de vue ; et
- les figures 6a et 6b représentent des vues schématiques expliquant le montage par clipsage de la pièce anti-usure sur son aube.

### EXPOSÉ DÉTAILLÉ DE MODES DE RÉALISATION PARTICULIERS

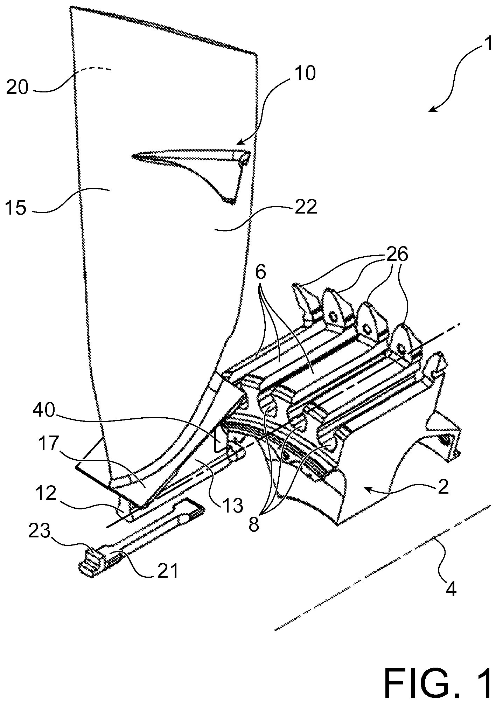

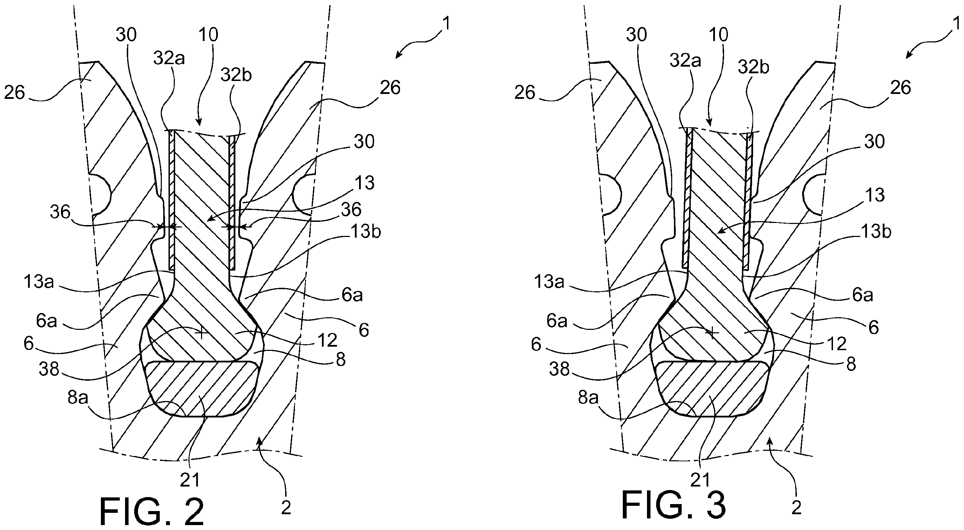

En référence tout d'abord aux figures 1 et 2, il est représenté une partie d'une soufflante 1 de turboréacteur pour aéronef, selon un mode de réalisation préféré de la présente invention.

Elle comprend globalement un disque 2 centré sur l'axe longitudinal 4 de la soufflante, disque à la périphérie duquel sont pratiquées des dents 6 espacées circonférentiellement les unes des autres, et s'étendant chacune sensiblement longitudinalement et radialement, à savoir sensiblement parallèlement à l'axe 4. Entre deux dents 6 directement consécutives dans la direction circonférentielle/tangentielle, celles-ci délimitent une alvéole 8 destinée à recevoir le pied 12 d'une aube de soufflante 10.

De façon connue, chaque dent 6 dispose d'une tête élargie de manière à pouvoir assurer la rétention des aubes dans la direction radiale vers l'extérieur. En d'autres termes, l'alvéole 8 présente une extrémité radiale externe rétrécie permettant le passage de l'échasse 13 de l'aube 10, de section/épaisseur rétrécie par rapport à celle de son pied 12. Ainsi, l'assemblage conféré est du type queue d'aronde, ou encore du type « attache sapin ».

En plus de l'échasse 13 et du pied d'aube 12 porté à l'extrémité radiale intérieure de cette échasse, l'aube 10 présente une pale aérodynamique portée par l'extrémité radiale extérieure de l'échasse. Au niveau de la jonction entre ces deux éléments, l'aube 10 comporte en outre une plateforme 17 destinée à être épousée extérieurement par le flux d'air traversant la soufflante. Cette plateforme 17, qui s'étend tangentiellement de part et d'autre de la pale 15, depuis la base de l'intrados 20 et de l'extrados 22 de celle-ci, se situe dans la continuité aérodynamique d'un cône d'entrée de soufflante (non représenté).

En outre, associée à chaque aube 10, la soufflante 1 comprend une cale 21 interposée entre l'extrémité inférieure du pied d'aube 12, et un fond 8a de l'alvéole associée à l'aube concernée.

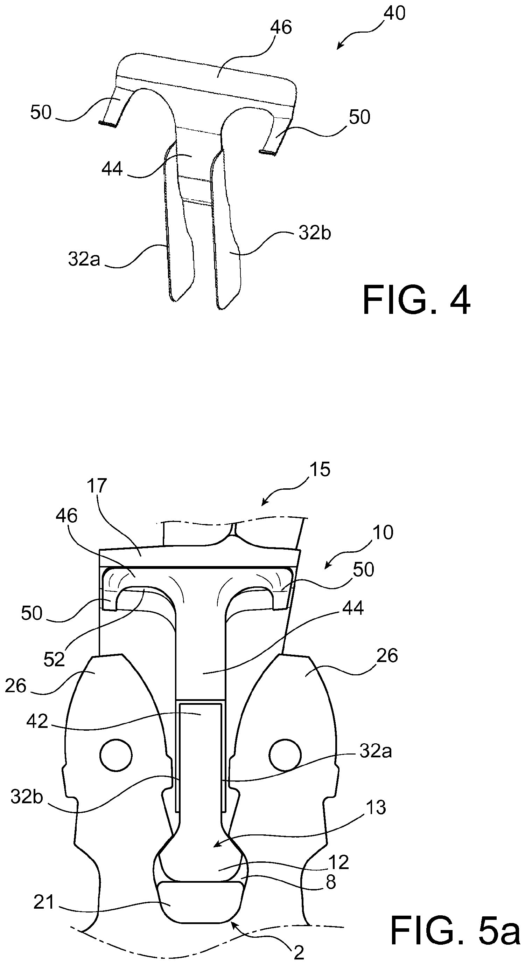

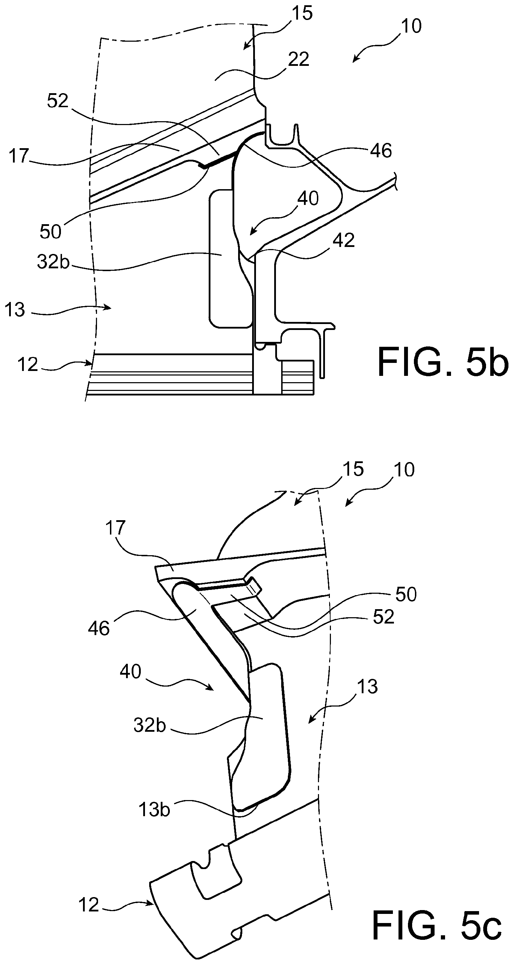

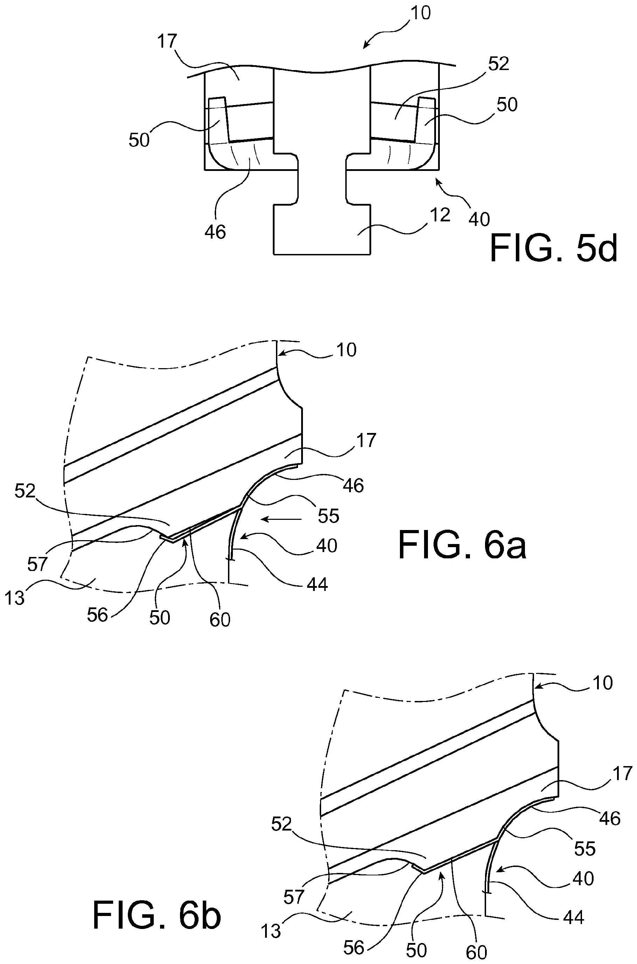

Comme cela est le mieux visible sur la figure 2, la cale 21 permet de positionner l'aube 10 dans la direction radiale vers l'intérieur lorsque la soufflante ne tourne pas. De plus, les cales 21 permettent le montage des aubes de soufflante 12 équipées d'un crochet de rétention axiale (visible sur les figures 5b et 5c), situé à l'aval, qui vient se glisser dans les encoches de rétention du tambour. En outre, comme visible sur la figure 1, la cale 21 comprend à l'amont une butée 23 de rétention axiale de son aube associée.

Bien que cela n'ait pas été représenté, il peut en outre être prévu une ou plusieurs cales de soufflante amortisseuses de vibrations interposées radialement entre la plateforme 17 de l'aube et la périphérie du disque 2, définie par la surface radialement externe des dents 6. Globalement, chaque cale prend la forme d'un bloc en élastomère équipé de plaquettes de contact prévues pour réduire les niveaux de vibration des aubes de soufflante.

Par ailleurs, le disque 2 comporte des brides de fixation 26 faisant saillie radialement vers l'extérieur depuis une extrémité arrière des dents 6. Ces brides 26, de préférence réalisées d'un seul tenant avec les dents 6, se trouvent ainsi agencées entre les alvéoles 8, comme cela est visible sur les figures 1 et 2. Dans le mode de réalisation représenté, une unique bride est prévue sur chaque dent, en étant percée d'un orifice pour le passage d'un boulon servant à la fixation du tambour.

Comme cela est le mieux visible sur la figure 2, la portion arrière de chaque échasse 13 traverse l'ouverture supérieure de l'alvéole 8. Elle inclut une première surface 13a située du côté de l'intrados de la pale 10 et une seconde surface 13b située du côté de l'extrados de cette pale, ces deux surfaces 13a, 13b de l'échasse étant parallèles entre elles, et opposées. La première surface 13a se situe en regard de l'extrémité élargie 6a de l'une des dents 6 formant l'ouverture de l'alvéole correspondante, tandis que la seconde surface 13b se situe en regard de l'extrémité élargie 6a d'une autre dent 6 directement consécutive, formant également l'ouverture de la même alvéole 8. De plus, chacune de ces deux surfaces 13a, 13b s'étend radialement vers l'extérieur en étant en regard de l'une des brides de fixation 26, en particulier en regard d'une butée tangentielle 30 pratiquée sur celle-ci.

Selon une particularité de l'invention, il est prévu une pièce anti-usure montée sur chaque aube 10 de manière à former un voile de protection 32a, 32b sur chacune des première et seconde surfaces 13a, 13b de l'échasse, empêchant le contact entre ces surfaces 13a, 13b et les brides de fixation 26 situées en regard.

En fonctionnement normal de la soufflante, essentiellement du fait de la force centrifuge, les aubes 10 s'orientent de façon telle que le premier voile de protection 32a recouvrant la première surface d'échasse 13a se situe à distance tangentielle de la butée 30 en regard, un jeu tangentiel 36 pouvant être observé. Il en est de même pour le second voile de protection 32b recouvrant la seconde surface d'échasse 13b, ce voile 32b se situant à distance tangentielle de la butée 30 en regard, un jeu tangentiel 36 étant également observé. Il n'y a donc pas de contact entre les voiles de protection et les brides de fixation.

En revanche, durant les phases d'autorotation de la soufflante, également dénommées phases de « windmilling », chaque aube 10 a tendance à osciller selon un axe 38 passant par le pied 12 et parallèle l'axe 4, entre deux positions extrêmes fixées par les deux butées tangentielles 30, 30. Dans ces positions extrêmes, dont l'une est représentée sur la figure 3, l'un des jeux 36 initialement prévu est entièrement consommé, ce qui conduit au contact mécanique entre le voile de protection et sa butée associée 30. Les voiles interdisent donc le contact direct entre l'échasse et les butées dans les positions extrêmes de l'aube, ce qui limite l'usure par frottement de cette échasse.

Les figures 4 à 5d montrent un exemple de réalisation de la pièce anti-usure 40 intégrant les deux voiles de protection 32a, 32b.

Cette pièce 40 est prévue pour être réalisée à partir d'une tôle métallique, de préférence en alliage Inconel 718, de forme plane et d'épaisseur comprise entre 0,2 et 0,5 mm, qui est ensuite découpée et pliée pour obtenir la forme finale souhaitée.

La pièce 40 intègre en effet les deux voiles parallèles 32a, 32b, chacun présentant une forme grossière de rectangle, dont l'une des longueurs est partiellement échancrée pour suivre le profil convexe d'une partie du chant arrière 42 de l'échasse 13. Les deux voiles sont reliés à leur extrémité supérieure par une portion de liaison 44, correspondant à la partie inférieure de la base d'un T, sensiblement orthogonale aux deux voiles 32a, 32b.

La partie supérieure de la base du T épouse la partie du chant arrière 42 de l'échasse 13 qui rejoint la plateforme 17. La branche supérieure du T, référencée 46 et portée par la base 44, épouse quant à elle une partie arrière radialement intérieure de la plateforme 17, en s'étendant dans la direction tangentielle de part et d'autre de la pale 15. Aux deux extrémités opposées de cette branche 46 sont prévus deux clips 50 servant au positionnement et au maintien de la pièce anti-usure 40 sur l'aube 10.

Chaque clip 50 présente la forme d'une languette élastique en U, dont la base s'étend sensiblement axialement, et dont les deux branches latérales sont sensiblement ouvertes, orientées radialement vers l'extérieur. Ces deux branches servent en enserrer une excroissance 52 de la plateforme 17, qui s'étend radialement vers l'intérieur. C'est donc le pincement de cette excroissance 52, par les deux branches de chacun des deux clips en forme de U, qui permet le montage de la pièce anti-usure 40 sur l'aube. Ce serrage peut éventuellement s'accompagner d'un autre serrage procuré par une force de pincement de l'ensemble élastique constitué des deux voiles 32a, 32b et de la base 44 du T, sur la portion arrière de l'échasse 13. Dans ce cas, cet ensemble élastique remplit alors une fonction de cavalier. Alternativement, il pourrait être prévu un faible jeu entre chacun des deux voiles 32a, 32b et leur surface associée 13a, 13b.

Sur les figures 6a et 6b, il a été schématisé le montage de la pièce anti-usure à l'aide des clips 50. Pour chaque clip 50, la branche du U qui est reliée à la branche supérieure du T 46 est tout d'abord appliquée contre une face 55 de l'excroissance 52 de la plateforme 17, avant que l'autre branche du U, référencée 56, ne soit forcée vers l'avant et vers le haut afin de se clipser sur une face opposée 57 de cette excroissance 52. Le clipsage est obtenu lorsque cette branche libre du U 56 dépasse l'arête entre la face 57 et la face radialement intérieure 60 de l'excroissance reliant les deux faces opposées 55, 57. Le passage de l'arête forme donc le point dur de ce montage par clipsage.

Bien entendu, diverses modifications peuvent être apportées par l'homme du métier à l'invention qui vient d'être décrite, uniquement à titre d'exemples non limitatifs.

## Revendications

1. Soufflante (1) de turboréacteur d'aéronef comprenant une pluralité d'aubes de soufflante (10) ainsi qu'un disque (2) définissant à sa périphérie une pluralité d'alvéoles (8), chaque aube comprenant une pale aérodynamique (15), un pied d'aube (12) logé dans l'une desdites alvéoles (8), ainsi qu'une échasse (13) interposée entre la pale et le pied, ladite échasse comprenant une portion arrière incluant une première surface (13a) située du côté de l'intrados (20) de la pale et une seconde surface (13b) située du côté de l'extrados (22) de cette pale, et le disque de soufflante (2) comprenant, entre les alvéoles (8), des brides de fixation (26) faisant saillie radialement vers l'extérieur de sorte que la première surface et la seconde surface (13a, 13b) se situent respectivement en regard de deux des brides de fixation (26, 26),
**caractérisée en ce qu'**au pour au moins l'une desdites aubes (10), la soufflante comporte une pièce anti-usure (40) montée sur l'aube de manière à former un voile de protection (32a, 32b) sur chacune des première et seconde surfaces (13a, 13b) de l'échasse, empêchant le contact entre chaque surface (13a, 13b) et la bride de fixation (26, 26) lui étant située en regard, et **en ce que** la pièce anti-usure (40) présente deux clips (50) chacun ayant la forme d'une languette élastique en U dont la base s'étend sensiblement axialement et dont les deux branches latérales sont sensiblement orientées radialement vers l'extérieur, les deux branches du U enserrent une excroissance (52) de la plateforme (17), qui s'étend radialement vers l'intérieur.

2. Soufflante selon la revendication 1, **caractérisée en ce que** chaque voile de protection (32a, 32b) présente une épaisseur comprise entre 0,2 et 0,5 mm.

3. Soufflante selon l'une quelconque des revendications précédentes, **caractérisée en ce que** ladite pièce anti-usure (40) est réalisée dans un alliage renfermant 80% de nickel, 14% de chrome et 6% de fer.

4. Soufflante selon l'une quelconque des revendications précédentes, **caractérisée en ce que** ladite pièce anti-usure (40) est réalisée par découpe et pliage d'une tôle.

5. Soufflante selon l'une quelconque des revendications précédentes, **caractérisée en ce que** chacune des aubes (10) de la soufflante est équipée d'une pièce anti-usure (40).

6. Turboréacteur pour aéronef comprenant une soufflante (1) selon l'une quelconque des revendications précédentes.

7. Pièce anti-usure (40) destinée à être montée sur une aube (10) d'une soufflante (1) de turboréacteur d'aéronef selon l'une quelconque des revendications 1 à 5, de manière à former un voile de protection (32a, 32b) sur chacune des première et seconde surfaces (13a, 13b) de l'échasse de l'aube.

## Patentansprüche

1. Gebläse (1) in TL-Triebwerken für Flugzeuge mit einer Vielzahl von Gebläseschaufeln (10) sowie einer Scheibe (2), die an ihrem Außenumfang eine Vielzahl von Aufnahmezellen (8) bildet, wobei jede Schaufel ein aerodynamisches Schaufelblatt (15), einen Schaufelfuß (12), der in einer der genannten Aufnahmezellen (8) sitzt, sowie eine Stelze (13), die zwischen dem Schaufelblatt und dem Fuß angeordnet ist, aufweist, wobei diese Stelze einen hinteren Abschnitt aufweist, der eine erste Oberfläche (13a), die sich auf der Seite der Druckseite (20) des Schaufelblatts befindet, und eine zweite Oberfläche (13b), die sich auf der Seite der Saugseite (22) des Schaufelblatts befindet, umfasst, und wobei die Gebläsescheibe (2) zwischen den Aufnahmezellen (8) Befestigungsflansche (26) aufweist, die in radialer Richtung nach außen ragen, so dass die erste Oberfläche und die zweite Oberfläche (13a, 13b) gegenüber den beiden Befestigungsflanschen (26 bzw. 26) in Stellung kommen,
**dadurch gekennzeichnet,**
**dass** bei mindestens einer der genannten Schaufeln (10) das Gebläse ein Verschleißschutz-Teil (40) aufweist, das an der Schaufel dergestalt angebracht ist, dass es jeweils einen Schutzschirm (32a bzw. 32b) auf der ersten und der zweiten Oberfläche (13a, 13b) der Stelze bildet, wodurch der Kontakt zwischen jeder Oberfläche (13a, 13b) und dem ihr gegenüber befindlichen Befestigungsflansch (26, 26) verhindert wird, und dass das Verschleißschutz-Teil (40) zwei Klipse (50) aufweist, die jeweils als eine elastische Zunge in der Form eines U ausgebildet sind, dessen Basis sich im Wesentlichen in axialer Richtung erstreckt und dessen beide Seitenschenkel im Wesentlichen radial nach außen gerichtet sind, wobei die beiden Schenkel des U eine Ausstülpung (52) der Schaufelplattform (17) umklammern, die sich radial nach innen erstreckt.

2. Gebläse nach Anspruch 1,
**dadurch gekennzeichnet,**
**dass** jeder Schutzschirm (32a, 32b) eine Stärke aufweist, die zwischen 0,2 und 0,5 mm beträgt.

3. Gebläse nach einem der vorherigen Ansprüche,
**dadurch gekennzeichnet,**
**dass** dieses Verschleißschutz-Teil (40) in einer Legierung ausgeführt ist, die 80 % Nickel, 14 % Chrom und 6 % Eisen enthält.

4. Gebläse nach einem der vorherigen Ansprüche,
**dadurch gekennzeichnet,**
**dass** dieses Verschleißschutz-Teil (40) durch Schneiden und Biegen eines Blechs hergestellt wird.

5. Gebläse nach einem der vorherigen Ansprüche,
**dadurch gekennzeichnet,**
**dass** jede der Schaufeln (10) des Gebläses mit einem Verschleißschutz-Teil (40) ausgerüstet ist.

6. TL-Triebwerk für Flugzeuge, welches ein Gebläse (1) nach einem der vorherigen Ansprüche aufweist.

7. Verschleißschutz-Teil (40), das dazu bestimmt ist, an einer Schaufel (10) eines Gebläses (1) von TL-Triebwerken für Flugzeuge nach einem der Ansprüche 1 bis 5 dergestalt angebracht zu werden, dass es jeweils einen Schutzschirm (32a bzw. 32b) auf der ersten und der zweiten Oberfläche (13a, 13b) der Stelze der Schaufel bildet.

## Claims

1. Aircraft turbojet fan (1) comprising a plurality of fan blades (10) as well as a disc (2) defining at its periphery a plurality of cells (8), which each blade comprising an aerodynamic vane (15), a blade root (12) housed in one of said cells (8), as well as a shank (13) inserted between the vane and the root, with said shank comprising a rear portion including a first surface (13a) located on the side of the bottom surface (20) of the vane and a second surface (13b) located on the side of the upper surface (22) of this vane, and the fan disc (2) comprising, between the cells (8), fastening clamps (26) protruding radially outwards in such a way that the first surface and the second surface (13a, 13b) are located respectively facing two of the fastening clamps (26, 26),
**characterised in that** for at least one of said blades (10), the fan comprises a wear-resistant part (40) mounted on the blade in such a way as to form a protective film (32a, 32b) on each one of the first and second surfaces (13a, 13b) of the shank, preventing contact between each surface (13a, 13b) and the fastening clamp (26, 26) being located facing, and **in that** the wear-resistant part (40) has two clips (50) each one having the form of a U-shaped elastic tab of which the base extends substantially axially and of which the two side branches are substantially oriented radially outwards, with the two branches of the U clamping a protuberance (52) of the platform (17), which extends radially inwards.

2. Fan according to claim 1, **characterised in that** each protective film (32a, 32b) has a thickness between 0.2 and 0.5 mm.

3. Fan as claimed in any preceding claim, **characterised in that** said wear-resistant part (40) is made from an alloy containing 80% nickel, 14% chromium and 6% iron.

4. Fan as claimed in any preceding claim, **characterised in that** said wear-resistant part (40) is carried out by cutting and folding a metal sheet.

5. Fan as claimed in any preceding claim, **characterised in that** each one of the blades (10) of the fan is provided with a wear-resistant part (40).

6. Aircraft turbojet comprising a fan (1) as claimed in any preceding claim.

7. Wear-resistant part (40) intended to be mounted on one blade (10) of a fan (1) of an aircraft turbojet according to any of claims 1 to 5, in such a way as to form a protective film (32a, 32b) on each one of the first and second surfaces (13a, 13b) of the shank of the blade.
